# EUROPÄISCHE PATENTANMELDUNG

(11) **EP 1 253 294 A2**
(43) Veröffentlichungstag der Anmeldung: **30.10.2002**
(21) Anmeldenummer: 02405277.1
(22) Anmeldetag: 09.04.2002
(51) Int. Cl.: F01D 11/12

(54) **Gasturbinendichtung**

(30) Priorität: 28.04.2001 DE 10121019
(71) Anmelder: ALSTOM (Switzerland) Ltd, 5401 Baden (CH)
(72) Erfinder: Fried, Reinhard, 5415 Nussbaumen (CH)

(57) **Zusammenfassung**

Die Erfindung betrifft eine Gasturbinendichtung, bestehend aus einem metallischen Bauteil (1) mit einer abnutzungsfesten oder erosionsbeständigen keramischen Beschichtung (2) und einer darauf lokal begrenzt angeordneten abschleifbaren Keramikschicht (18), wobei auf der Oberfläche (4) des metallischen Bauteiles (1) eine Haftschicht (5) angeordnet ist, auf welche die abnutzungsfeste oder erosionsbeständige keramische Beschichtung (2) als Deckschicht aufgebracht ist. Die Erfindung ist dadurch gekennzeichnet, dass die Haftschicht (5) aus separaten nebeneinander angeordneten kugelförmigen Rivets (6) oder aus Steg (7) und Kopf (8) aufweisenden pilzförmigen Rivets (6) besteht. Diese bilden einzelne Metallinseln mit vielen Hinterschneidungen (12), um welche ein durchgehendes Keramiknetz liegt. Es lassen sich sehr dicke Schichten realisieren, die eine gute Haftfestigkeit aufweisen, wobei die Keramik auch bei radial/tangentialer Krafteinleitung, sichelförmiger Berührung oder örtlich hoher Überhitzung/Reibungshitze nicht abplatzt und eine gute Dichtwirkung erzielt wird.

## Beschreibung

### Technisches Gebiet

Die Erfindung bezieht sich auf das Gebiet der Strömungstechnik. Sie betrifft eine Gasturbinendichtung, bestehend aus einem metallischen Bauteil mit einer abnutzungsfesten oder erosionsbeständigen keramischen Beschichtung und einer darauf lokal begrenzt angeordneten abschleifbaren Keramikschicht. Derartige beschichtete Bauteile werden beispielsweise zur Dichtung und thermischen Isolierung zwischen rotierenden und stehenden Bauteilen in Gasturbinenanlagen eingesetzt.

### Stand der Technik

Es ist bekannt, dass zur Erhöhung der Effizienz von thermischen Strömungsmaschinen möglichst nur geringe Spiele zwischen dem Gehäuse und den rotierenden Schaufelspitzen im Verdichter und in der Turbine vorhanden sein sollen, um die Leckage der Luft bzw. der Verbrennungsprodukte zwischen den beiden Bauteilen zu minimieren bzw. zu verhindern und dadurch Verluste möglichst gering zu halten.

Eine Möglichkeit, derartige Leckagen zu reduzieren, besteht darin, bei der Fertigung und dem Zusammenbau der Bauteile die Toleranzen zwischen den stehenden und den rotierenden Bauteilen so eng wie möglich zu gestalten. Das hat allerdings den Nachteil, dass einerseits die Kosten immer höher werden je enger die Toleranzen zwischen den entsprechenden Bauteilen sind und dass anderseits aufgrund der unterschiedlich starken Wärmedehnung und -kontraktion der Bauteile vor, während und nach dem Betrieb Wechselwirkungen zwischen diesen Bauteilen auftreten, welche Verschleiss und andere Schäden an den Komponenten verursachen.

Aus diesem Grunde wurden verschiedene Dichtungssysteme entwickelt, z. B. Einlaufschichten, auch Abradables genannt, welche auf die Oberfläche der ruhenden Bauteile aufgebracht werden und in die sich während des Betriebes die rotierenden Bauteile einschleifen.

Bekannte Einlaufschichten sind beispielsweise die klassischen Honeycombs. Diese bestehen aus honigwabenförmig aufgelöteten dünnen Blechen, die im Streiffall abgetragen werden und so ein Minimalspiel zwischen dem rotierenden Bauteil, z. B. einer rotierenden Schaufelspitze einer Gasturbine, und dem ruhenden Bauteil, z. B. einem stehenden Gehäuseelement einer Gasturbine, ermöglichen. Honeycombs weisen Steghöhen von ca. 3 mm bis 12 mm und mehr auf, so dass sich die rotierenden Gegenseite bis zu mehreren Millimetern tief in die Einlaufschicht einschleifen kann.

Seit den 80iger Jahren ist man auch bestrebt, keramische flamm- oder plasmagespritzte Einlaufschichten zu realisieren, da die Turbineneintrittstemperaturen zwecks Steigerung der Leistung bzw. zwecks Wirkungsgradverbesserung erhöht wurden und aus diesem Grunde die den hohen Temperaturen ausgesetzten metallischen Substrate mit keramischen Schutzschichten versehen werden mussten.

Aus der Veröffentlichung von A. Sickinger und J. Söhngen: Development of thermal spray layers as gas path for aircraft turbine engines. International Thermal Spray Conference, Essen, 02.05.1983 ist bekannt, keramisches Material in die Honeycombs zu spritzen. Dabei wird auf die metallische Oberfläche des Grundkörpers beispielsweise mittels Plasma- oder Flammspritzen eine Haftschicht mit möglichst rauher Oberfläche, hier Ni-Cr-Al, aufgespritzt. Die Rauhigkeit der Oberfläche dient dem formschlüssigen Verankern der anschliessend auf diese Oberfläche ebenfalls plasma- oder flammgespritzten Wärmedämmschicht, auch Thermal Barrier Coating (TBC) genannt, aus einem nichtmetallischen Material, hier ZrO₂-CaO. Wegen der sehr unterschiedlichen Wärmeausdehnungskoeffizienten zwischen Metallen und nichtmetallischen Materialien, wie Keramiken, gelingen diese Verbindungen üblicherweise aber nur bis zu einer Schichtdicke von <500 µm. Anschliessend wird eine Zwischenschicht aus ZrO₂-CaO+Ni-C aufgebracht, auf welche letztendlich die Einlaufschicht aus Ni-C thermisch aufgespritzt wird. Derartige Keramikschichten in den Honeycombs haben sich in der Praxis für hohe Beanspruchungen nicht durchgesetzt.

Aus EP 0 965 430 A2 ist eine Gasturbinenluftdichtung bekannt, bei der auf einem Grundmaterial zunächst eine dünne Haftschicht aus Aluminiumoxid aufgebracht ist. Auf dieser Aluminiumoxidschicht ist wiederum eine Schicht aus abnutzungsfestem oder erosionsbeständigem keramischen Material (TBC) angeordnet, auf welcher schliesslich ein abschleifbares keramisches Material (Einlaufschicht) örtlich begrenzt appliziert ist. Damit lassen sich nachteilig nur relativ geringe Schichtdicken erzielen, die in Gasturbinenanlagen, vor allem in den letzten Verdichterstufen bzw. in den Turbinenstufen, für eine erforderliche Wärmedämmung bzw. ein erforderliches Abschleifen oftmals nicht ausreichend sind.

Zwar ist es heutzutage mit einem besonders grossen Aufwand auch möglich, ca. 1 mm bis 2 mm dicke keramische Schichten zu spritzen. Diese reagieren jedoch auf äussere Krafteinwirkung sehr empfindlich. Gerade bei Einlaufschichten muss man aber mit einem stärkeren Anstreifen rechnen. Radial/tangentiale Krafteinleitung, sichelförmige Berührung oder auch örtlich hohe Überhitzung/Reibungshitze bringen die Keramik schnell zum Abplatzen, wenn die Gegenseite nicht abrasiv genug ist und schnell schneidet.

Um eine ausreichende Haftung ohne die eben genannten Nachteile von dicken keramischen Schichten auf einem Grundkörper zu gewährleisten müssen daher sehr grobe Haltestrukturen auf der Oberfläche des Grundkörpers erzeugt werden.

Der Anmelderin sind verschiedene Verfahren, siehe z. B. DE 100 57 187.5, bekannt, bei dem kugel- oder pilzförmige grobe Haltestrukuren (Ankerpunkte, auch Rivets genannt) für aufzubringende keramische Materialien auf einer metallischen Oberfläche durch einen Schweiss- oder einen Giessprozess erzeugt werden. Diese keramische Materialien sind dabei vor allem Wärmedämmschichten, welche z. B. in Gasturbinenbrennkammern eingesetzt werden und ständig hohen thermischen Beanspruchungen und gelegentlich örtlichen Schlagbeanspruchungen ausgesetzt sind.

### Darstellung der Erfindung

Die Erfindung versucht, die genannten Nachteile des bekannten Standes der Technik zu vermeiden. Ihr liegt die Aufgabe zugrunde, eine Gasturbinendichtung zu entwickeln, bestehend aus einem metallischen Bauteil mit einer abnutzungsfesten oder erosionsbeständigen keramischen Beschichtung, beispielsweise einer Wärmedämmschicht und einer darauf lokal begrenzt angeordneten abschleifbaren Keramikschicht, wobei trotz hoher Schichtdicken der Keramik von bis zu ca. 20 mm eine gute Haftfestigkeit erzielt werden soll, die dafür sorgt, dass auch bei radial/tangentialer Krafteinleitung, sichelförmiger Berührung oder örtlich hoher Überhitzung/Reibungshitze die Keramik nicht abplatzt.

Erfindungsgemäss wird dies bei einer Gasturbinendichtung gemäss Oberbegriff des Patentanspruches 1 dadurch gelöst, dass die Haftschicht aus separaten nebeneinander angeordneten kugelförmigen Rivets oder Steg und Kopf aufweisenden pilzförmigen Rivets besteht.

Erfindungsgemäss besteht das Gasturbinendichtungssystem aus einer erfindungsgemässen Gasturbinendichtung und einem rotierenden Bauteil, vorzugsweise einer Laufschaufel, welches sich in die abschleifbare Keramikschicht einschleift.

Vorteilhaft ist hierbei, dass mit der erfindungsgemässen Gasturbinendichtung hohe Schichtdicken der Keramik von bis zu ca. 20 mm realisiert werden, die eine gute Haftfestigkeit aufweisen, wobei die Keramik auch bei radial/tangentialer Krafteinleitung, sichelförmiger Berührung oder örtlich hoher Überhitzung/Reibungshitze nicht abplatzt und eine gute Dichtwirkung erzielt wird.

Durch den Einsatz von Rivets als Haftschicht wird ausserdem erreicht, dass ein durchgehendes Keramiknetz mit einzelnen Metallinseln gebildet wird, was sich positiv auf die Eigenschaften der Schicht auswirkt. So sind insbesondere die niedrigere Wärmeleitung, die geringere der Oxidation ausgesetzte Metalloberfläche und die bessere Verankerung der Keramikschicht bei den erfindungsgemässen Haltestrukturen gegenüber den aus dem Stand der Technik bekannten netz- bzw. gitterartigen Haltestrukturen zu nennen.

Vorteilhafte Ausgestaltungen der Gasturbinendichtung sind in den Unteransprüchen 2 bis 12 offenbart.

Von Vorteil ist, dass sowohl die Schichtdicke der abschleifbaren Keramikschicht (Einlaufschicht) mit ca. 1 bis 8 mm als auch die der abnutzungsfesten oder erosionsbeständigen Keramikschicht (meist plasmagespritzte Wärmedämmschicht TBC) mit 1 bis 20 mm gegenüber dem bekannten Stand der Technik vergleichsweise gross ist. Dies ist nur durch die hervorragenden Verankerungsmöglichkeiten der Keramik an den Hinterschneidungen der Rivets möglich. Die Rivets können in ihrer Höhe genau den jeweiligen Erfordernissen angepasst werden. Ebenso ist die TBC-Schicht den jeweiligen Beanspruchungsbedingungen anpassbar, sie kann beispielsweise gradiert (unterschiedliches Material, also unterschiedliche Keramiken und/oder in unterschiedlicher Dichte gespritzt) oder ungradiert aufgebaut sein. Schliesslich kann das metallische Bauteil auch noch zusätzlich mit einer Oxidationsschutzschicht beschichtet sein, auf die dann die TBC-Schicht aufgebracht wird.

### Kurze Beschreibung der Zeichnung

In der Zeichnung sind mehrere Ausführungsbeispiele der Erfindung dargestellt.

Es zeigen:
- Fig. 1: einen Schnitt durch eine Gasturbinendichtung in einer ersten Ausführungsvariante der Erfindung;
- Fig. 2: einen Schnitt durch eine Gasturbinendichtung in einer zweiten Ausführungsvariante der Erfindung;
- Fig. 3: einen Schnitt durch eine Gasturbinendichtung in einer dritten Ausführungsvariante der Erfindung;
- Fig. 4: einen Schnitt durch eine Gasturbinendichtung in einer vierten Ausführungsvariante der Erfindung und
- Fig. 5: einen Schnitt durch eine Gasturbinendichtung in einer fünften Ausführungsvariante der Erfindung.

Es sind nur die für die Erfindung wesentlichen Merkmale in den Figuren dargestellt.

### Wege zur Ausführung der Erfindung

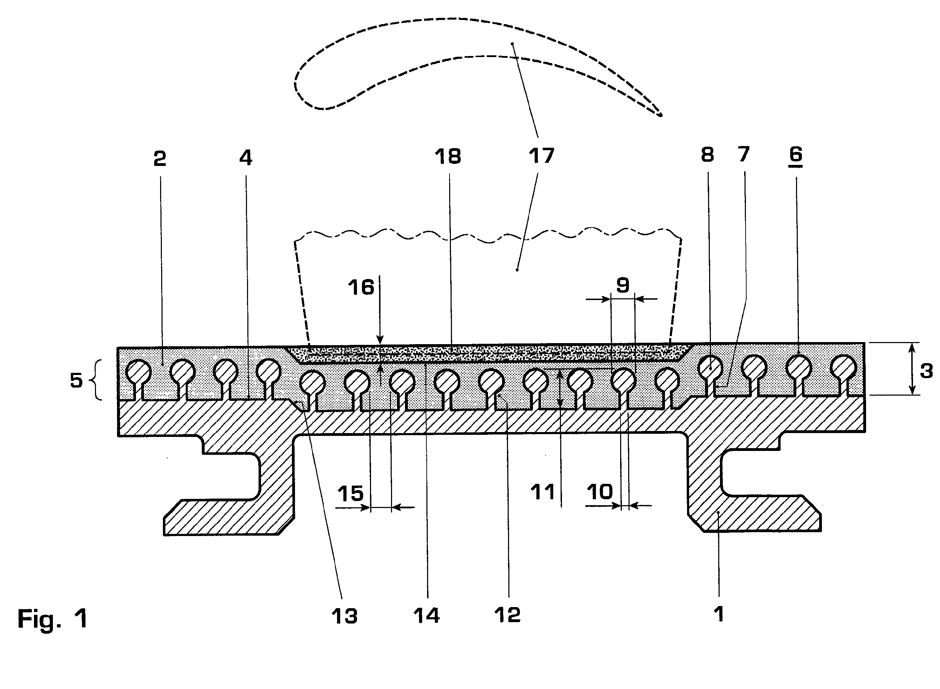

Nachfolgend wird die Erfindung anhand von Ausführungsbeispielen und der Figuren 1 bis 5 näher erläutert.

In den Fig. 1 bis 5 sind Schnitte von vier verschiedenen Varianten der erfindungsgemässen Gasturbinendichtung dargestellt. Es ist jeweils eine Schaufelspitzendichtung gezeigt.

In Fig. 1 ist eine Schaufelspitzendichtung einer Gasturbine dargestellt, welche aus einem metallischen Bauteil 1, auf dem eine abnutzungsfeste oder erosionsbeständige keramische Schicht 2, beispielsweise eine Wärmedämmschicht aus Yttrium-stabilisierten Zirkonoxid mit folgender chemischen Zusammensetzung: 2,5 % HfO₂, 7-9 % Y₂O₃, < 3 % andere, Rest ZrO, mittels Plasmaspritzen aufgespritzt ist. Ein Aufbringen mittels Flammspritzen ist ebenfalls möglich. Die Schicht 2 weist eine konstante Schichtdicke 3 auf, d. h. sie folgt der Oberflächenkontur des Bauteiles 1, welches gemäss Fig. 1 keine plane Oberfläche 4, sondern einen Absatz 13 aufweist. Daher weist an dieser Stelle die Schicht 2 eine Vertiefung 14 auf.

Zwecks Verbesserung der Haftfestigkeit der Schicht 2 ist auf der Oberfläche 4 des Bauteiles 1 eine Haftschicht 5 aufgebracht, die aus einzelnen Ankerpunkten, hier Rivets 6 genannt, gebildet wird. Die Rivets 6 können entweder zusammen mit dem metallischen Bauteil 1 mitgegossen sein oder sie können separat vorgefertigt und anschliessend auf die Oberfläche 4 aufgeschweisst sein.

Die Rivets 6 haben gemäss Fig. 1 eine pilzförmige Struktur und weisen einen Steg 7 und einen Kopf 8 auf. Sie haben eine konstante Höhe 11 und sind gleichmässig verteilt auf der Oberfläche 4 angeordnet, und zwar auch im Bereich des Absatzes 13.

Von Vorteil ist, wenn diese pilzförmigen Rivets 6 einen Kopfdurchmesser 9 von ca. 0,8 mm bis 3 mm und einen Stegdurchmesser 10 von ca. 0,5 mm bis 2 mm, sowie eine Höhe 11 von ca. 1 mm bis 10 mm aufweisen. Dann sind sehr gute Verankerungsmöglichkeiten für die später aufzubringende keramische Schicht 2 gegeben.

Durch die spezielle Form der Rivets 6 wird erreicht, dass eine entsprechende Oberflächenrauhigkeit geschaffen wird, wodurch das im flüssigem Zustand aufzutragende keramische Material (Schicht 2) eine formschlüssige Verbindung mit dem metallischen Bauteil 1 herstellt, d.h., dass von den Rivets 6 entsprechende Hintergreifungen 12 in Form von Freiräumen zwischen den Rivets 6 und den metallischern Bauteil 1 (Grundkörper) gebildet werden, in die das keramische Material einfliesst bzw. sich verkrallt und somit eine feste Verbindung des nichtmetallischen Materials mit dem metallischen Material hergestellt wird.

Wesentlich 1 ist, dass eine definierte Oberflächenrauhigkeit mit ausreichenden Hintergreifungen 12 hergestellt wird, damit eine hohe Festigkeit und vor allem auch eine verhältnismässig grosse Schichtdicke 3, welche vorzugweise 1 bis 20 mm beträgt, der keramischen Schicht 2 erzielt wird. Das ist die Voraussetzung dafür, dass auch bei radial/tangentialer Krafteinleitung, sichelförmiger Berührung oder örtlich hoher Überhitzung/Reibungshitze die Keramik nicht abplatzt.

Der Abstand 15 zwischen zwei benachbarten Köpfen 8 der Rivets 6 sollte vorzugsweise ca. das 1- bis 5-fache des Durchmessers 9 des Kopfes 8 betragen. Grössere Abstände sind ebenfalls denkbar.

In die Vertiefung 14 der abnutzungsfesten oder erosionsbeständigen keramischen Schicht 2 ist gemäss Fig. 1 eine abschleifbare Keramikschicht 18 (Einlaufschicht) eingebracht worden, deren Dicke 16 vorzugsweise 1 bis 8 mm beträgt. Diese Schicht 18 füllt die Vertiefung 14 vollständig aus. Während des Betriebes der Gasturbinenanlage schleift sich in die Schicht 18 die rotierende Laufschaufel 17 ein, so dass sich eine sehr gute Dichtwirkung ergibt. Die Einlaufschicht 18 besteht aus keramischem Material, vorzugsweise TBC-Material, welches aber wesentlich poröser gespritzt ist als die Wärmedämmschicht. Diese keramischen Materialen für die Einlaufschichten 18 müssen so porös gespritzt werden, dass sie beim Anstreifen der Laufschaufel 17 kleinkörnig brechen.

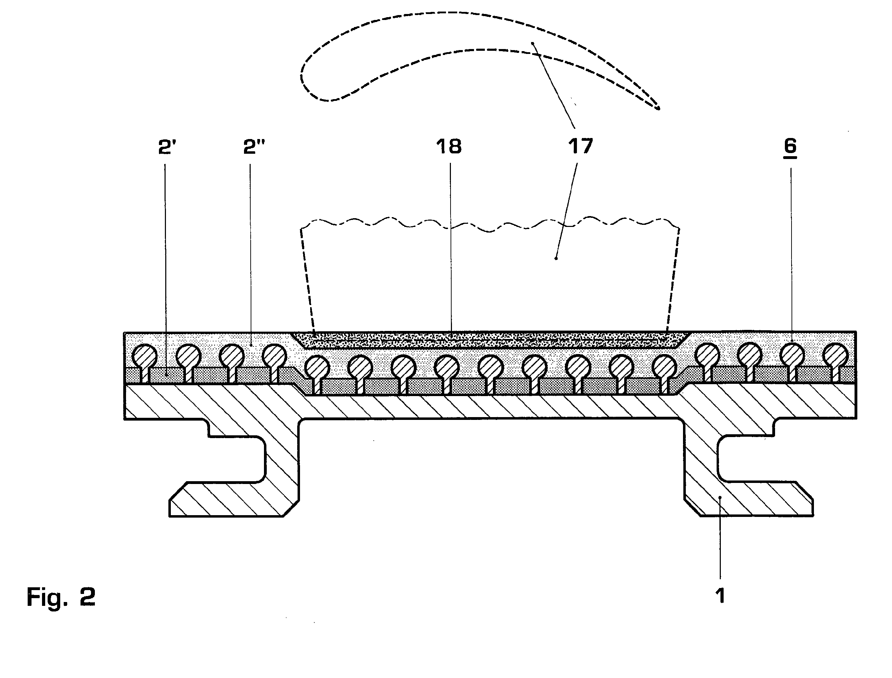

In Fig. 2 ist ein zweites Ausführungsbeispiel dargestellt. Es unterscheidet sich von dem Beispiel gemäss Fig. 1 nur darin, dass die abnutzungsfeste keramische Schicht 2 gradiert aufgebracht ist, d.h. sie weist entweder eine unterschiedliche Dichte auf (Teilschicht 2' und Teilschicht 2") oder sie besteht aus keramischen Materialien mit unterschiedlicher chemischer Zusammensetzung.

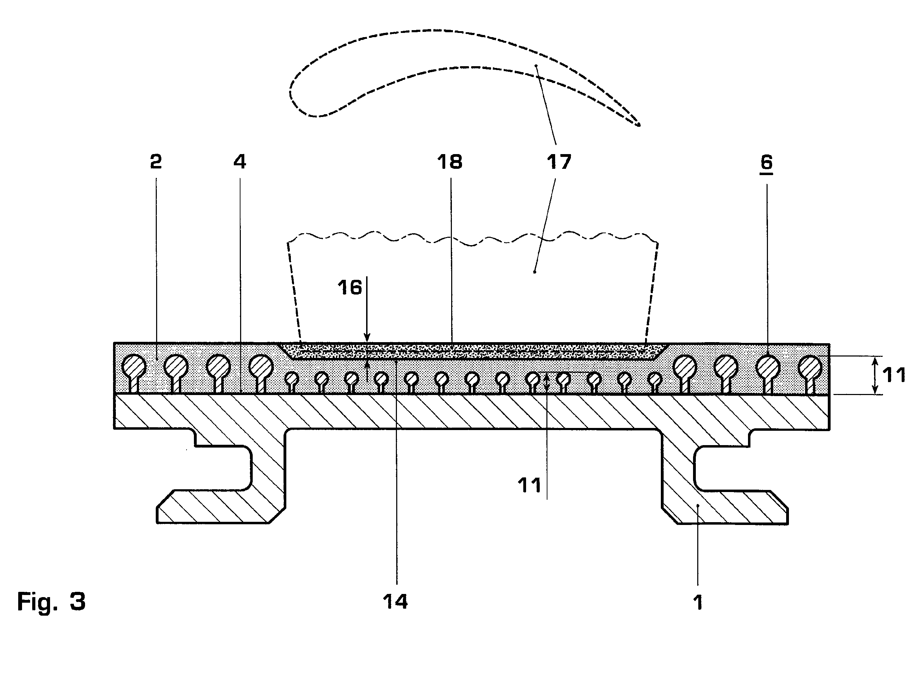

Fig. 3 zeigt in einem Schnitt ein drittes Ausführungsbeispiel der Erfindung. Das metallische Bauteil 1 weist hier im Unterschied zu den ersten beiden Ausführungsbeispielen eine plane Oberfläche 4. Die Dicke 3 der keramischen Schicht 2 ist nicht konstant, sondern lokal unterschiedlich. Sie ist an der Stelle mit der Vertiefung 14 mit 4,5 mm geringer als an den äusseren Stellen mit 8 mm. In der Vertiefung 14 ist wiederum die abschleifbare Keramikschicht 18 eingebracht, in welche sich während des Betriebes der Gasturbine die Laufschaufel 17 einschleift. Die Schichtdicke 16 der Einlaufschicht 18 beträgt in diesem Ausführungsbeispiel 3,5 mm. Die Rivets 6 sind im Gegensatz zu den ersten beiden Ausführungsbeispielen in ihrer Höhe 11 der jeweiligen Schichtdicke 3 angepasst, d.h. im Bereich der abschleifbaren Keramikschicht 18 sind die Rivets 6 kleiner (3 mm) als in den anderen Bereichen (5,5 mm). Sie haben neben der aufgeführten geringeren Höhe 11 auch einen kleineren Kopfdurchmesser 9.

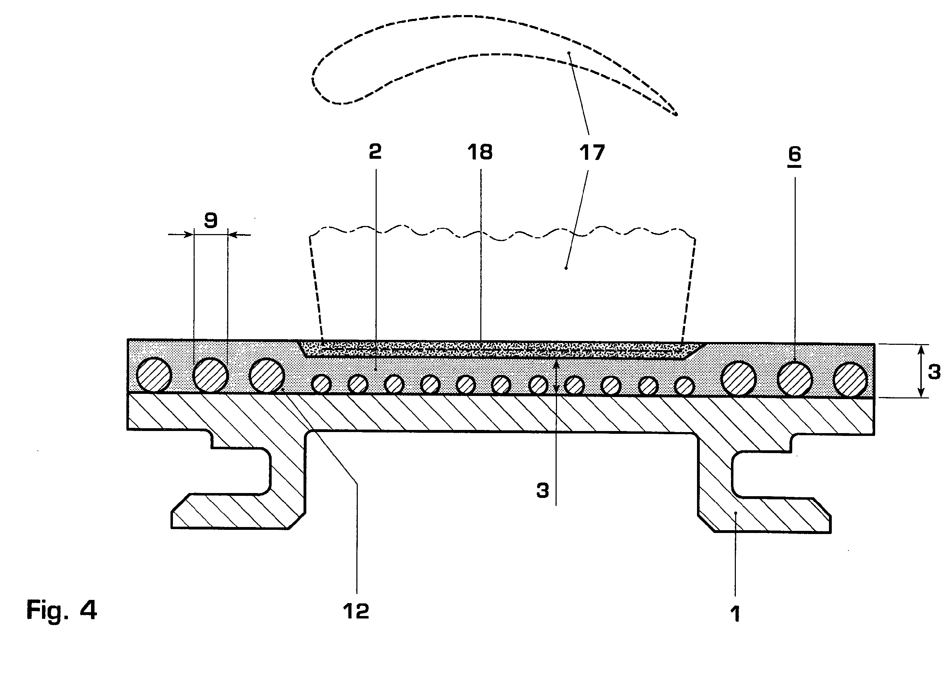

Selbstverständlich können neben den beschriebenen pilzförmigen Rivets 6 auch kugelförmige Rivets 6, wie in Fig. 4 dargestellt, verwendet werden. Dieses vierte Ausführungsbeispiel ist analog zum dritten, lediglich die Rivetform ist unterschiedlich. Die kugelförmigen Rivets 6 (Fig. 4) haben einen Durchmesser 9, welcher im Bereich von 0,5 mm bis 3 mm liegt. Auch mit dieser Geometrie werden grosse Hinterschneidungen 12 realisiert, die zu einer hohen Haftfestigkeit der keramischen Materialien auf dem metallischen Bauteil 1 bzw. der Haftschicht 3 führt, so dass auch bei radial/tangentialer Krafteinleitung, sichelförmiger Berührung oder örtlich hoher Überhitzung/Reibungshitze die Keramik nicht abplatzt. In dem Bereich, in welchem lokal die Einlaufschicht 18 angeordnet ist, sind kugelförmige Rivets 6 mit einem kleineren Durchmesser 9 angeordnet als an den anderen Stellen, da im Bereich der Schicht 18 die darunter angeordnete keramische Schicht 2 auch eine geringere Dicke 3 aufweist als an den anderen Stellen.

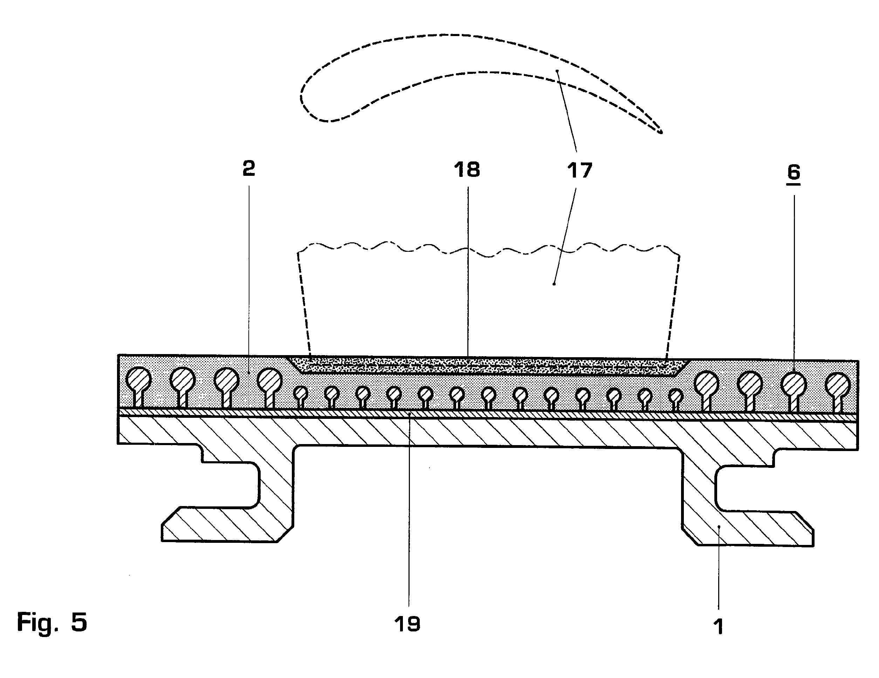

In Fig. 5 ist schliesslich eine Ausführungsvariante abgebildet, welche sich von derjenigen in Fig. 3 dargestellten Variante nur dadurch unterscheidet, dass auf der Oberfläche 4 des metallischen Bauteiles 1 zusätzlich eine Oxidationsschutzschicht 19 aus MCrAIY aufgeschweisst ist. Die Rivets 6 können dann entweder in, auf oder durch diese Schicht aufgeschweisst werden und anschliessend werden dann die TBC-Schicht 2 und die abschleifbare Keramikschicht 18 aufgebracht.

Selbstverständlich ist die Erfindung nicht auf die beschriebenen Ausführungsbeispiele beschränkt.

### Bezugszeichenliste

- 1: metallisches Bauteil
- 2: abnutzungsfeste oder erosionsbeständige keramische Schicht
- 3: Dicke von Pos. 2
- 4: Oberfläche von Pos. 1
- 5: Haftschicht
- 6: Rivet
- 7: Steg von Pos. 6
- 8: Kopf von Pos. 6
- 9: Durchmesser von Pos. 8
- 10: Durchmesser von Pos. 7
- 11: Höhe von Pos. 6
- 12: Hinterschneidung
- 13: Absatz
- 14: Vertiefung
- 15: Abstand zwischen zwei benachbarten Pos. 8
- 16: Dicke von Pos. 18
- 17: Laufschaufel
- 18: Abschleifbare Keramikschicht/Einlaufschicht
- 19: Oxidationsschutzschicht

## Patentansprüche

1. Gasturbinendichtung, bestehend aus einem metallischen Bauteil (1) mit einer abnutzungsfesten oder erosionsbeständigen keramischen Beschichtung (2) und einer darauf lokal begrenzt angeordneten abschleifbaren Keramikschicht (18), wobei auf der Oberfläche (4) des metallischen Bauteiles (1) eine Haftschicht (5) angeordnet ist, auf welche die abnutzungsfeste oder erosionsbeständige keramische Beschichtung (2) als Deckschicht aufgebracht ist, **dadurch gekennzeichnet, dass** die Haftschicht (5) aus separaten nebeneinander angeordneten kugelförmigen Rivets (6) oder aus Steg (7) und Kopf (8) aufweisenden pilzförmigen Rivets (6) besteht.

2. Gasturbinendichtung nach Anspruch 1, **dadurch gekennzeichnet, dass** die abschleifbare Keramikschicht (18) eine Dicke (16) von ca. 1 mm bis 8 mm aufweist.

3. Gasturbinendichtung nach Anspruch 1, **dadurch gekennzeichnet, dass** die abnutzungsfeste oder erosionsbeständige Keramikschicht (2) eine Dicke (3) von ca. 1 mm bis 20 mm aufweist.

4. Gasturbinendichtung nach einem der Ansprüche 1 bis 3, **dadurch gekennzeichnet, dass** die abnutzungsfeste oder erosionsbeständige Keramikschicht (2) eine konstante Dicke (3) aufweist.

5. Gasturbinendichtung nach einem der Ansprüche 1 bis 3, **dadurch gekennzeichnet, dass** die abnutzungsfeste oder erosionsbeständige Keramikschicht (2) lokal eine unterschiedliche Dicke (3) aufweist.

6. Gasturbinendichtung nach Anspruch 4 oder 5, **dadurch gekennzeichnet, dass** die abnutzungsfeste oder erosionsbeständige Keramikschicht (2) eine Vertiefung (14) aufweist, in welcher die abschleifbare Keramikschicht (18) angeordnet ist.

7. Gasturbinendichtung nach Anspruch 1, **dadurch gekennzeichnet, dass** die pilzförmigen Rivets (6) einen Durchmesser (9) des Kopfes (8) von ca. 0,8 mm bis 3 mm und einen Durchmesser (10) des Steges (7) von ca. 0,5 mm bis 2 mm aufweisen.

8. Gasturbinendichtung nach Anspruch 1, **dadurch gekennzeichnet, dass** die pilzförmigen Rivets (6) eine Höhe (11) von ca. 1 mm bis 10 mm aufweisen.

9. Gasturbinendichtung nach Anspruch 1, **dadurch gekennzeichnet, dass** die kugelförmigen Rivets (6) einen Durchmesser (9) von ca. 0,5 mm bis 3 mm aufweisen.

10. Gasturbinendichtung nach Anspruch 1, **dadurch gekennzeichnet, dass** der Abstand (15) zwischen zwei benachbarten Köpfen (8) der Rivets (6) ca. das 1- bis 5-fache des Durchmessers (9) des Kopfes (8) beträgt.

11. Gasturbinendichtung nach einem der Ansprüche 1 bis 10, **dadurch gekennzeichnet, dass** die Rivets (6) eine an die Dicke (3) der abnutzungsfesten oder erosionsbeständigen Keramikschicht (2) angepasste Höhe (11) aufweisen.

12. Gasturbinendichtung nach einem der Ansprüche 1 bis 11, **dadurch gekennzeichnet, dass** die abnutzungsfeste oder erosionsbeständige Keramikschicht (2) gradiert aufgebaut ist, d. h. aus unterschiedlichem Material besteht und/oder eine unterschiedliche Dichte aufweist.

13. Gasturbinendichtung nach einem der Ansprüche 1 bis 12, **dadurch gekennzeichnet, dass** auf der Oberfläche (4) des metallischen Bauteiles (1) zusätzlich eine Oxidationsschutzschicht (19) aufgebracht ist.

14. Gasturbinendichtungssystem, bestehend aus einer Gasturbinendichtung gemäss einem der Ansprüche 1 bis 13 und einem rotierenden Bauteil, vorzugsweise einer Laufschaufel (17), welches sich während des Betriebes der Gasturbine in die abschleifbare Keramikschicht (18) einschleift.
